Europäisches Patentamt

European Patent Office

Office européen des brevets

(19)

(11) Numéro de publication : **0 366 547 B1**

# (12) FASCICULE DE BREVET EUROPEEN

(45) Date de publication du fascicule du brevet :
**29.04.92 Bulletin 92/18**

(51) Int. Cl.⁵ : **G01W 1/16**

(21) Numéro de dépôt : **89402946.1**

(22) Date de dépôt : **25.10.89**

(54) **Procédé pour déterminer la direction et le sens d'arrivée d'une onde électromagnétique impulsionnelle et dispositif pour la mise en oeuvre du procédé.**

(30) Priorité : **27.10.88 FR 8814039**

(43) Date de publication de la demande :
**02.05.90 Bulletin 90/18**

(45) Mention de la délivrance du brevet :
**29.04.92 Bulletin 92/18**

(84) Etats contractants désignés :
**CH DE GB IT LI**

(56) Documents cités :
**EP-A- 0 058 502**
**EP-A- 0 186 402**
**US-A- 4 198 599**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Baubron, Gilles 4 Bis, Boulevard Eugène Lagauche F-91290 Saint-Germain-les-Arpajon (FR)**

(74) Mandataire : **Mongrédien, André et al c/o BREVATOME 25, rue de Ponthieu F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 366 547 B1

Jouve, 18, rue Saint-Denis, 75001 PARIS

## Description

La présente invention a pour objet un procédé pour déterminer la direction et le sens d'arrivée d'une onde électromagnétique impulsionnelle et un dispositif pour la mise en oeuvre du procédé. Elle s'applique notamment à la détection et à la localisation d'éclairs.

On sait qu'il est important de pouvoir déterminer la direction et le sens d'arrivée ainsi que la localisation des éclairs. On peut alors prévenir des incendies ou protéger efficacement des installations électriques.

On connaît déjà, par l'article "Locating cloud to ground lightning with wideband magnetic direction finders" de M.W. Maier et al. paru dans Fifth symposium on meteorogical and instrumentation April 11/15 1983 TORONTO, un dispositif permettant de déterminer la direction (ou le sens) d'arrivé d'une onde électromagnétique issue d'un éclair. Ce dispositif couplé à d'autres identiques mais distants permet de déterminer la localisation de l'éclair.

On sait qu'un éclair commence par une faible décharge électrique (précurseur appelé "leader" en terminologie anglo-saxonne) allant des nuages vers le sol. Cette décharge se propage en se décomposant en une série de paliers successifs. Lorsqu'elle touche le sol, une décharge très lumineuse appelée coup en retour ("return stroke" en terminologie anglo-saxonne) se propage rapidement vers les nuages, empruntant le chemin ionisé tracé par le précurseur. Pour un même éclair, une dizaine de coups en retour se succèdent, séparés de 10 à 50 ms. Le temps de montée d'une impulsion de coup en retour dépend de la distance parcourue avant sa détection. Il peut aller de une à dix microsecondes au moins. Un coup en retour a une durée d'environ cent microsecondes.

Chaque coup en retour est associé à une onde électromagnétique considérée comme plane et qui se propage librement. La direction de propagation d'une onde électromagnétique en un point est donnée par son vecteur de Poynting. On ne considère que le cas de la propagation au-dessus d'un sol conducteur : le champ électrique de l'onde est perpendiculaire au sol et l'induction magnétique de l'onde est parallèle à celui-ci.

Le dispositif connu détecte l'onde électromagnétique émise par les coups en retour grâce à une antenne pour le champ électrique et deux boucles magnétiques orthogonales pour le champ magnétique. L'induction magnétique est donc décomposée suivant deux directions orthogonales déterminées. En effectuant le rapport entre les deux composantes et en prenant l'arc tangente de ce rapport, on détermine (à $\pi$ près) l'angle d'arrivée de l'onde électromagnétique par rapport à une direction connue (celle de l'axe Nord-Sud par exemple). La levée de l'indétermination sur l'angle s'effectue grâce à la connaissance du champ électrique et par la résolution de l'équation de propagation de l'onde électromagnétique. On détermine ainsi la direction et le sens d'arrivée de l'onde électromagnétique sur le détecteur. Ce procédé est bien connu pour déterminer la direction d'ondes radiofréquences.

Si plusieurs dispositifs de ce type sont couplés, on peut déterminer la localisation de l'éclair par triangulation.

En fait, ce dispositif connu détecte l'amplitude maximum du champ électrique correspondant à l'onde électromagnétique émise par chaque coupe en retour. Une moyenne entre ces diverses valeurs est effectuée pour calculer l'angle d'arrivée de l'onde. Ce dispositif présente un inconvénient majeur. Un seul point est prélevé sur chaque impulsion de coup en retour, ce point correspondant au maximum d'amplitude. Mais des phénomènes parasites, comme une réflexion de l'onde sur un obstacle, peuvent provoquer des perturbations sur la forme de l'onde électromagnétique détectée. En particulier, des maxima d'amplitudes correspondant à des impulsions parasites provenant d'une onde réfléchie peuvent être intégrées au calcul qui donne alors une direction d'arrivée fausse.

Le but de la présente invention est de pallier cet inconvénient. Le calcul de l'angle d'arrivée de l'onde électromagnétique est effectué pour chaque en retour séparément, sur plusieurs points pour chaque impulsion, certains de ces points se situant plus particulièrement sur le front de descente du coup en retour, zone de l'impulsion peu perturbée par des parasites ; par comparaison avec la direction d'arrivée moyenne calculée à partir de ces points, on peut différencier les points appartenant au coup en retour de ceux provenant de parasites et donc ne pas prendre en compte les phénomènes perturbateurs.

De manière plus précise, l'invention concerne un procédé pour déterminer la direction et le sens d'arrivée d'une onde électromagnétique par rapport à une direction déterminée, cette onde électromagnétique étant détectée de manière à obtenir : un premier signal électrique analogique E/O proportionnel à l'amplitude de l'induction magnétique et correspondant à une première composante de l'onde électromagnétique suivant un premier plan vertical, un second signal électrique analogique N/S proportionnel à l'amplitude de ladite induction magnétique et correspondant à une seconde composante de l'onde électromagnétique suivant un second plan vertical et orthogonal au premier, un troisième signal électrique analogique E proportionnel aux variations temporelles de l'amplitude du champ électrique composant l'onde électromagnétique ; ce procédé consiste à :

– en permanence et à une période T, échantillonner et convertir les signaux E/O et N/S en signaux numé-

2

riques E/ON et N/SN de manière synchrone,

– déterminer le signe du signal E, de manière synchrone avec la conversion des signaux E/O et N/S,

– mémoriser les signaux numériques E/ON et N/SN et le signe de E leur correspondant,

– à la suite d'un déclenchement, effectuer encore une mémorisation de P mots, un mot étant constitué des signaux numériques et du signe de E leur correspondant, puis lire ces P mots et X mots précédant ces P mots,

– traiter les signaux et les signes lus de manière à déterminer, au moins, la direction et le sens d'arrivée de l'onde électromagnétique par rapport à une direction de référence déterminée.

Selon une variante du procédé, le traitement est déclenché lorsque la valeur absolue du signal E franchit un seuil VS fixé par l'utilisateur.

P mots sont encore écrits en mémoire après le déclenchement, puis le traitement est effectué sur ces P mots et X mots précédant le déclenchement. Un mot comprend les informations suivantes : les signaux numériques donnant l'amplitude du champ magnétique et le signe des variations du champ électrique, ceci à un temps connu.

La détermination de la direction d'arrivée comprend deux étapes. Une première détermination d'une valeur moyenne $\theta m$ de l'angle d'arrivée de l'onde par rapport à une direction déterminée. Le calcul de $\theta m$ s'effectue en prenant la moyenne de chacun des angles déterminés pour Q mots choisis parmi les X mots stockés en mémoire précédant le déclenchement. La deuxième étape consiste à calculer, pour un nombre (Max-Q) suffisant de mots choisis parmi les P mots écrits en mémoire après le déclenchement, l'angle d'arrivée de l'onde.

Chaque angle calculé est comparé à $\theta m$. Si la différence entre les deux valeurs est supérieure à une valeur PR fixée par l'utilisateur définissant la précision de la mesure, l'angle calculé est rejeté. Le calcul est stoppé pour un nombre R d'angles consécutifs rejetés.

En effet, si la valeur d'une suite de R angles consécutifs s'écarte trop de la valeur de $\theta m$, on considère que l'onde électromagnétique détectée a été perturbée.

Chaque angle calculé retenu est intégré à la valeur moyenne, au fur et à mesure du calcul. On obtient en fin de calcul un angle d'arrivée $\theta$ déterminé à $\pi$ près.

Le sens d'arrivée de l'onde est déterminé de manière classique par la connaissance du signe des variations du champ électrique qui permet de lever l'indétermination attachée au calcul de l'angle d'arrivée, grâce à la résolution de l'équation de propagation.

L'invention a aussi pour objet un dispositif pour la mise en oeuvre du procédé. Ce dispositif comprend :

– des premiers moyens pour convertir un signal électrique analogique E/O en un signal numérique E/ON délivrant ce dernier sur une sortie,

– des seconds moyens pour convertir un signal électrique analogique N/S en un signal numérique N/SN délivrant ce dernier sur une sortie,

– des moyens pour comparer la valeur absolue d'un signal E avec un signal de référence VS, et déterminer le signe dudit signal E, ces moyens délivrant sur une première sortie un signal de déclenchement D lorsque la valeur absolue du signal comparé est supérieure au signal de référence VS, et délivrant sur une seconde sortie un signal SE indiquant le signe du signal comparé,

– des moyens de comptage-décomptage délivrant sur une sortie un signal d'autorisation d'écriture et de lecture W/R, sur une autre sortie un signal de comptage AD, et sur une autre sortie un signal d'autorisation d'accès AA,

– un séquenceur délivrant un signal C1 de synchronisation sur une première sortie reliée à des entrées des premiers et seconds moyens pour convertir un signal analogique en un signal numérique, et délivrant un signal de synchronisation C2 sur une sortie reliée à une entrée des moyens de comparaison et de détermination du signe d'un signal, et à des entrées des moyens de conversion analogique/numérique et délivrant un signal de synchronisation C3 sur une sortie reliée à un entrée des moyens de comptage-décomptage,

– une porte reliée par une première entrée à la sortie des premiers moyens pour convertir un signal analogique en signal numérique, par une seconde entrés à la sortie des seconds moyens de conversion analogique/numérique, par une troisième entrée à la seconde sortie des moyens de comparaison et de détermination du signe d'un signal, par une quatrième entrée à la sortie des moyens de comptage-décomptage, cette porte délivrant un signal W sur une sortie,

– une mémoire reliée par une première entrée à la sortie de la porte, par une seconde entrés à la sortie des moyens de comptage-décomptage et délivrant un signal R sur une sortie,

– un processeur muni d'un coprocesseur de calcul et d'au moins quatre ports d'entrée/sortie, ce processeur étant relié par une première entrée à la première sortie des moyens de comparaison et de détermination du signe d'un signal, et par une seconde entrée à la sortie de la mémoire, ce processeur délivrant des signaux de commande CO1, CO2 sur une première sortie reliée à une entrée desdits moyens de comparaison et de détermination du signe d'un signal, sur une seconde sortie reliée à une entrée des moyens de comptage-décomptage.

A la sortie des capteurs, l'échantillonnage est effectué en permanence, délivrant des signaux correspondant aux amplitudes des composantes de champ magnétique et au signe du champ électrique. Ces signaux sont écrits en mémoire en permanence. Quand les moyens de comparaison détectent un franchissement de seuil sur l'amplitude du champ électrique, P échantillonnages sont encore écrits en mémoire. Ces P échantillons et les X échantillons les précédant sont lus par le processeur qui effectue le calcul de l'angle et du sens d'arrivée de l'onde électromagnétique. Le processeur effectue aussi la gestion de l'ensemble du dispositif par l'intermédiaire des ports d'entrée/sortie.

Les caractéristiques et avantages de l'invention apparaîtront mieux après la description qui suit donnée à titre explicatif et nullement limitatif.

Cette description se réfère à des dessins annexés sur lesquels :
– les figures 1A et 1B représentent schématiquement un coup en retour non perturbé et un coup en retour perturbé,
– la figure 2 représente schématiquement un dispositif conforme à l'invention,
– la figure 3 est une représentation symbolique de l'écriture et de la lecture des informations placées en mémoire,
– la figure 4 représente schématiquement un mode de réalisation des moyens de conversion d'un signal analogique en un signal numérique,
– la figure 5 représente schématiquement un mode de réalisation de moyens pour comparer un signal à un signal de référence et pour déterminer son signe,
– la figure 6 représente schématiquement un mode de réalisation des moyens de comptage-décomptage,
– la figure 7 représente un organigramme regroupant les principales étapes du calcul de la direction et du sens d'arrivée d'une onde électromagnétique.

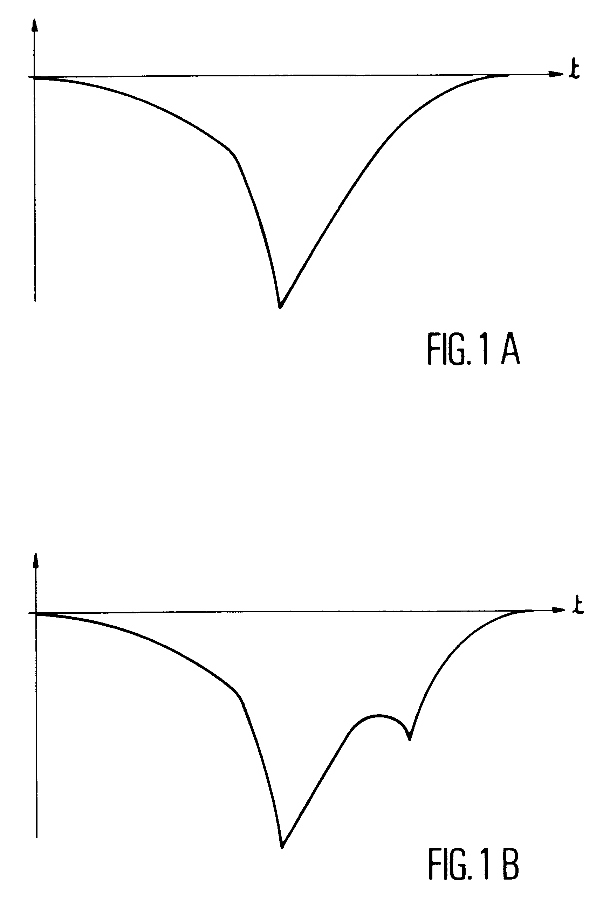

La figure 1A représente schématiquement une impulsion électrique (négative) d'un coup en retour en fonction du temps t (les ordonnées sont en unité arbitraire). On voit que le front de descente présente d'abord une pente assez faible puis atteint son maximum de manière abrupte.

On montre que plus la détection du coup en retour est proche du lieu d'éclatement de l'éclair, plus le front est abrupt ; d'autre part, l'amplitude de l'onde électromagnétique associée est d'autant plus importante.

Sur la figure 1B, on voit une impulsion de coup en retour perturbée par une impulsion parasite. Dans le cas de l'art antérieur, les deux pics sont intégrés à la mesure de la direction d'arrivée de l'onde électromagnétique issue de l'éclair.

Selon l'invention, on effectue un échantillonnage permanent à une période T des signaux électriques analogiques E/O et N/S correspondant aux deux composantes de l'induction magnétique projetée sur deux plans verticaux et orthogonaux entre eux. La normale à l'un de ces plans est par exemple dans l'axe Nord-Sud et définit une direction de référence. Dans ce cas, N/S est égal à $H \cos \theta$ et E/O est égal à $H \sin \theta$, H étant l'amplitude de l'induction magnétique et $\theta$ l'angle d'arrivée compté positivement à partir de cette direction. L'arc tangente du rapport (E/O)/(N/S) est donc égal à $\theta$ (à $\pi$ près). Les signaux E/O et N/S échantillonnés sont convertis en permanence en signaux numériques E/ON et N/SN. Le signe de E, signal correspondant aux variations temporelles de l'amplitude du champ électrique est déterminé de manière synchrone avec la conversion des signaux E/O et N/S. Le signal correspondant au signe de E est noté SE.

Ces informations (signaux numériques E/ON et N/SN et signe SE mesuré de manière synchrone) sont écrites dans une mémoire au fur et à mesure de l'échantillonnage.

Le choix de la période T fixe la limite de précision de l'échantillonnage. Pour T = 800 ns par exemple, les impulsions dont le temps de descente du front est inférieur à 1,6 microseconde sont mal échantillonnées. Mais ces impulsions correspondent à des éclairs proches des capteurs (on sait que le temps de descente augmente avec la distance entre les capteurs et la localisation de l'éclair). Ces éclairs proches engendrent des ondes électromagnétiques d'une puissance telle qu'elle sature l'électronique mise en oeuvre lors de la détection. En d'autres termes, le choix de T fixe la distance minimum au-delà de laquelle les éclairs sont détectés convenablement.

En permanence, la valeur de E est comparée avec une valeur de référence VS. Cette valeur est déterminée de manière classique par l'utilisateur selon les types d'éclairs à détecter et la sensibilité de la détection voulue.

Lorsque la valeur absolue de E est supérieure à VS, on effectue encore P écritures en mémoire ; P est un nombre égal à 128 par exemple, puis on bloque l'écriture. Cela revient à conserver P mesures après le franchissement du seuil VS par E ; c'est-à-dire à effectuer des mesures pendant une centaine de microsecondes après le franchissement du seuil. Le contenu de la mémoire est ensuite lu.

Plus précisément, on lit dans l'ordre inverse à leur écriture, les P mots stockés en mémoire après le déclenchement et les X mots les précédant, c'est-à-dire précédant le déclenchement (procédé de "pré-trigg" en terminologie anglo-saxonne). X peut être égal à 20 par exemple. De cette manière, on a accès à des signaux correspondant au front de l'onde, zone très peu perturbée par des parasites.

Les informations contenues dans les P+X mots sont traités de manière à déterminer au moins la direction et le sens d'arrivée de l'onde électromagnétique.

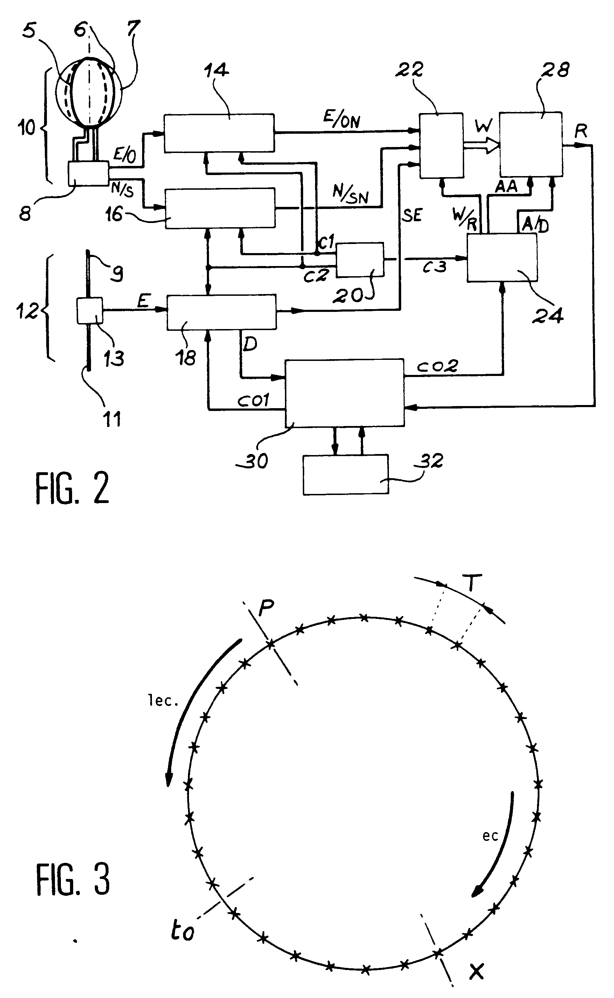

La figure 2 représente schématiquement un dispositif permettant la mise en oeuvre d'un tel procédé.

Le capteur de champ magnétique 10 est constitué de deux spires 5, 6 circulaires constituées par des câbles coaxiaux de 600 mm de diamètre par exemple placés dans deux rainures dessinées sur une sphère en matériau amagnétique 7, un composite verre-résine par exemple.

Les deux spires 5, 6 sont positionnées dans deux plans verticaux et orthogonaux entre eux, un de ces plans étant parallèle à la direction de l'axe Nord-Sud par exemple.

Le conducteur extérieur de chaque câble coaxial est sectionné sur une faible largeur à la partie supérieure des spires 5, 6. L'ensemble des conducteurs extérieurs est relié à la référence électrique du capteur (masse) formant ainsi un blindage vis-à-vis du champ électrique pour les conducteurs intérieurs, mais grâce à la coupure des conducteurs extérieurs, laissant agir l'induction magnétique sur ceux-ci.

Une des extrémités de chaque conducteur intérieur des câbles coaxiaux composant les spires 5, 6 est reliée à la masse ; l'autre extrémité est connectée à un préamplificateur 8. L'impédance d'entrée de ce préamplificateur 8 doit être faible vis-à-vis de l'impédance des spires 5, 6 pour garantir une bonne linéarité de l'amplificateur 8 (tension de sortie proportionnelle au flux de l'induction magnétique traversant une spire, quelle que soit la fréquence). Le préamplificateur 8 effectue une conversion courant-tension. Il fournit sur deux sorties un signal proportionnel au courant parcourant chaque spire 5, 6.

Ainsi une première sortie délivre un signal électrique analogique N/S proportionnel à l'amplitude du champ magnétique capté part la spire placée dans le plan perpendiculaire à l'axe Nord-Sud. Une seconde sortie délivre un signal électrique analogique E/O proportionnel à l'amplitude du champ magnétique capté par la spire placée dans le plan parallèle à la direction de l'axe Nord-Sud.

Pour un bon fonctionnement du dispositif et puisque pour déterminer l'angle d'arrivée, on effectue le rapport (E/O)/(N/S), la réponse (en fréquence et en gain) du préamplificateur 8 aux signaux provenant de chaque spire 5, 6 doit être identique. Pour permettre de calibrer chaque voie du préamplificateur 8, le capteur 10 est complété par un dispositif connu (non représenté) de calibration. Ce dispositif comprend une spire de fil conducteur placée le long de chacune des spires 5, 6. Une source d'alimentation reliée à ces fils délivre un courant sinusoïdal amorti. On peut ainsi vérifier la calibration et la similitude des réponses sur chacune des sorties du préamplificateur 8.

Le dispositif selon l'invention comporte aussi un capteur champ électrique 12 composé de deux tiges métalliques 9, 11 connectées à un amplificateur différentiel à grande réjection de mode commun 13. Ces tiges métalliques 9, 11 (autrement appelées "fouet") de 1 m de longueur par exemple, sont alignées suivant un axe vertical et positionnées à hauteur prédéterminée du sol. L'amplificateur 13 délivre sur une sortie un signal E proportionnel aux variations du champ électrique capté.

La première sortie du capteur de champ magnétique 10 est reliée à une entrée des premiers moyens 14 pour convertir un signal analogique en un signal numérique ; la seconde sortie du capteur 10 est reliée à une entrée des seconds moyens 16 de conversion analogique numérique.

Les premiers et seconds moyens 14 et 16 délivrent sur des sorties des signaux numériques E/ON et N/SN codés sur 12 bits par exemple, correspondant à l'amplitude du flux magnétique traversant chacune des spires 5, 6.

Le capteur de champ électrique 12 est connecté à une entrée de moyens 18 pour comparer la valeur absolue d'un signal à un signal de référence VS et déterminer le signe dudit signal. Les moyens 18 délivrent sur une sortie un signal numérique SE codé sur 1 bit par exemple, ce signal correspond au signe déterminé.

Les moyens 14, 16 et 18 sont reliées chacun à une entrée d'une porte 22 qui reçoit donc les signaux numériques E/ON et N/SN correspondant au flux du champ magnétique traversant chacune des spires et SE correspondant au signe du signal E.

Un séquenceur 20 relié par des sorties à des entrées des moyens 14, 16, 18 permet de synchroniser la détermination du signe et la conversion analogique-numérique sur chacune des voies magnétiques.

Le séquenceur 20 est relié de manière classique à une horloge non représentée.

Ce séquenceur 20 réalisé par exemple par des circuits 74 LS 123 est en outre relié à une entrée des moyens 24 de comptage et de décomptage définissant entre autres la valeur de P, prise par exemple égale à 128. Ces moyens 24 sont reliés par une sortie à une entrée de la porte 22 et à une entrée d'une mémoire RAM 28 du type MK 4801 fabriqué par la Société MOSTEK par exemple.

La porte 22 est elle aussi reliée par une sortie à une entrée de la mémoire 28 de manière à écrire en mémoire les informations permettant le calcul de la direction et du sens d'arrivée de l'onde captée (signal W).

La figure 3 représente de manière symbolique le fonctionnement d'une mémoire 28.

Chaque croix sur le cercle représente une adresse dans la mémoire. A chaque écriture un mot est placé dans une adresse. Un mot comporte les signaux E/ON, N/SN et SE ce qui correspond à 24 bits. En fait, chaque mot écrit est composé de 32 bits, les 7 bits restants pouvant contenir des informations annexes.

La mémoire contient L adresses ; L est égal à 1024 par exemple.

La flèche notée ec symbolise le sens d'écriture dans la mémoire. Lorsque les L adresses sont occupées, les écritures suivantes écrasent successivement les informations écrites L fois la période T avant.

Au temps to, le signal E est supérieur à VS (en valeur absolue) ; P mots sont encore adressés en mémoire. Puis ces P mots ainsi que X mots les précédant (ou en d'autres termes précédant le déclenchement) sont lus, dans le sens symbolisé par la flèche notée lec.

X peut être au maximum égal à L-P, c'est-à-dire 896 par exemple, ce qui correspond à une remontée d'environ 0,7 ms avant le déclenchement.

Le dispositif de la figure 2 comprend un processeur 30 qui effectue le calcul de la direction et du sens d'arrivée de l'onde et qui, de plus, gère le fonctionnement d'ensemble du dispositif.

En fait le processeur 30 peut être un microprocesseur du type Z80 fabriqué par la société Zilog par exemple, ce microprocesseur étant muni de ports d'entrée-sortie ("Parallel input-ouptut" en terminologie anglo-saxonne) et d'un processeur de calcul, du type AM 9511 fabriqué par la société AMD par exemple.

Le processeur 30 est relié par une entrée à une sortie du circuit 18 et par une sortie à une entrée de 18. D'autre part, la mémoire 28 est reliée par une sortie à une entrée de 30 ; cette sortie délivrant le signal R. Le processeur 30 est aussi connecté par une sortie à une entrée des moyens 24 de comptage-décomptage.

Le processeur 30 est relié à des moyens de visualisation 32 qui permettent l'affichage des résultats obtenus : direction d'arrivée, sens, heure de déclenchement, etc...

Les moyens pour convertir un signal analogique en un signal numérique 14 et 16 constituent deux voies identiques : elles sont réalisées de la même manière.

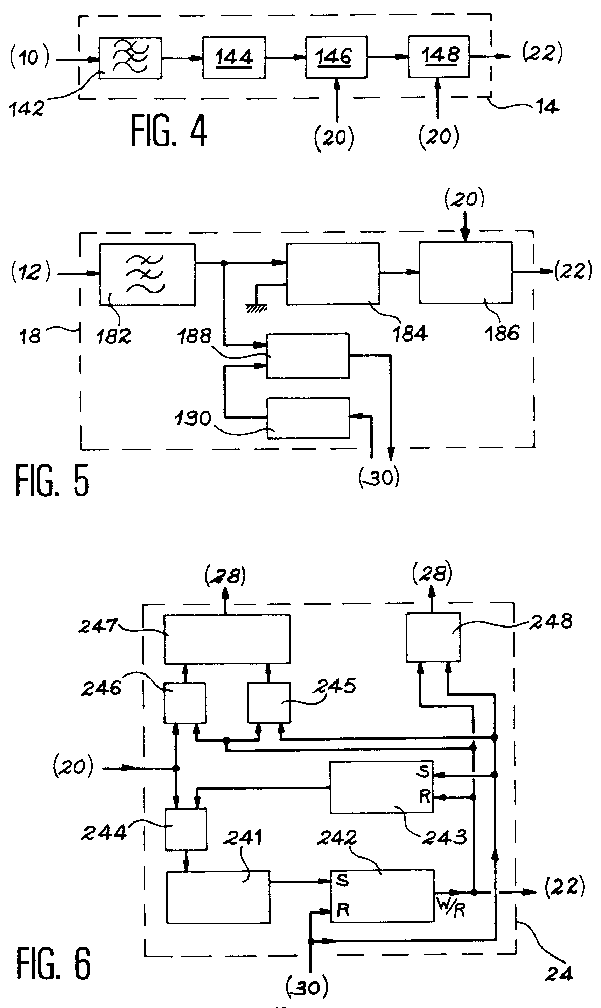

La figure 4 représente schématiquement un mode de réalisation des moyens pour effectuer une conversion analogique-digitale 14.

Ces moyens 14 comprennent un filtre passe-bas 142 qui peut être du type de Butterworth d'ordre 4 par exemple. Selon un exemple particulier de réalisation la fréquence de coupure du filtre à été choisie égale à 400 kHz, ce qui est compatible avec la fréquence d'échantillonnage de 1,25 MHz (période d'échantillonnage T = 800 ns). L'entrée du filtre 142 correspond à l'entrée des moyens 14 reliée à la sortie du capteur 10.

Le filtre 142 est relié par une sortie à une entrée d'un amplificateur 144 dont le gain est commutable. A l'aide des tests qui sont effectués par le dispositif de calibration le gain de cet amplificateur 144 est rendu identique à celui qui équipe les moyens 16 : ainsi les deux voies sont équilibrées.

L'amplificateur 144 est relié par une sortie à une entrée d'un échantillonneur-bloqueur ("sample and hold" en terminologie anglo-saxonne) du type SHM 4860 fabriqué par la Société Datel par exemple.

Cet échantillonneur-bloqueur 146 est connecté à un convertisseur analogique-numérique 148, par exemple du type ADC 868 fabriqué par la société Datel qui numérise un signal analogique d'entrée en un signal codé sur 12 bits. La sortie du convertisseur 148 est reliée à la sortie des moyens 14 connectée à la porte 22.

La figure 5 représente un mode de réalisation des moyens 18 pour comparer un signal à un signal de référence et pour déterminer son signe. L'entrés des moyens 18 reliée au capteur de champ électrique est connectée à l'entrée d'un filtre passe-bas 182 de type Butterworth d'ordre 4 par exemple. Selon un exemple particulier de réalisation, la fréquence de coupure du filtre a été choisie égale à 400 kHz par exemple.

Ce filtre 182 est relié d'une part à une chaîne de détermination du signe et d'autre part à une chaîne de comparaison avec un signal de référence.

La chaîne de détermination du signe comprend un comparateur 184 et une mémoire 186. Le comparateur est du type LM 161 fabriqué par la société National semi-conductor par exemple. Il délivre sur une sortie un signal SE codé sur 1 bit par exemple et correspondant au signe du signal comparé.

Ce signe est écrit dans la mémoire 186 qui est reliée par une entrée à une sortie du séquenceur 20. La mémoire 186 est lue sur ordre du séquenceur 20, c'est-à-dire qu'elle délivre sur une sortie reliée à une entrée de la porte 22, le signal SE correspondant au signe lorsqu'elle reçoit un signal d'horloge provenant du séquenceur 20. De cette manière, l'information "signe du champ électrique" est délivrée de manière synchrone avec l'échantillonnage et la conversion analogique-numérique des signaux correspondant à l'amplitude du flux magnétique qui sont aussi commandés par les signaux d'horloge délivrés par le séquenceur 20.

La chaîne de comparaison comprend un comparateur 188 de type LM 161 fabriqué par la société National Semi-conductor par exemple et un convertisseur numérique/analogique 190.

Une première entrée du comparateur 188 reçoit le signal à comparer E ; une deuxième entrée reçoit le signal de référence VS issu du convertisseur 190. Lorsque la valeur absolue du signal à comparer est supérieure à VS, le comparateur 188 délivre un signal de déclenchement de l'écriture D sur une sortie reliée au processeur 30.

Le signal de référence VS est fourni par le processeur 30 sous forme numérique (signal CO1), ce qui explique la présence du circuit 190.

Par les moyens 14 et 16, les valeurs du flux magnétique traversant les deux spires 5 et 6 sont en permanence échantillonnées et converties en signaux numériques E/ON et N/SN rangés dans les diférentes adresses de la mémoire 28. Ces valeurs sont accompagnées du signe du signal E délivré par les moyens 18. Ces écritures en mémoire se font à un rythme (1,25 MHz par exemple) commandé par le séquenceur 20.

Lorsque le signal E franchit la valeur-seuil VS, les moyens 18 émettent un signal de déclenchement D vers le processeur 30. En retour, le processeur 30 provoque le décomptage de P écritures en mémoire. Commandées par les moyens 24 de comptage-décomptage, ces P écritures s'effectuent, puis la porte 22 se bloque et toujours commandées par les moyens 24, P + X lectures des contenus de la mémoire 18 s'effectuent avec X entier égal à 20 par exemple. Les informations lues sont écrites dans une mémoire du processeur 30 et prêtes à être traitées.

La figure 6 représente schématiquement un mode de réalisation des moyens 24 de comptage-décomptage. Ces derniers comportent un décompteur 241 du type 74 LS 193 fabriqué par la société TEXAS INSTRUMENTS par exemple prépositionné à la valeur P relié par une sortie à une entrée S d'une première bascule R-S 242 réalisée avec des circuits 74 LS 107 et 74 LS 00 fabriquée par la société TEXAS INSTRUMENTS par exemple délivrant sur une sortie un signal d'ordre d'écriture/lecture W/R. Cette sortie est reliée à une entrée de la porte 22. L'entrée R de cette bascule 242 est reliée à une sortie 30.

Une seconde bascule R-S 243, un assemblage de circuits 74 LS 107 et 74 LS 00 fabriqués par la Société TEXAS INSTRUMENTS par exemple, est reliée par son entrée R à la sortie de la première bascule 242, et par son entrée S à une sortie de processeur 30. Cette seconde bascule 243 délivre un signal sur une sortie reliée à une entrée d'une porte "ET" 244 ; une seconde entrée de cette porte 244 est reliée à une sortie du séquenceur 20. Une sortie de 244 est reliée à une entrée du décompteur 241.

Le signal W/R est appliqué sur une entrée d'une porte "ET" 245 et sur une entrée d'une porte "NON-ET" 246. Une deuxième entrée de la porte 245 est reliée à une sortie du processeur 30. Une deuxième entrée de la porte "NON-ET" 246 est reliée à une sortie du séquenceur 20. Ces deux portes 245, 246 délivrent des signaux de commande sur des sorties reliées à deux entrées d'un compteur-décompteur 247, un 74 LS 193 fabriqué par la société TEXAS INSTRUMENTS par exemple. Ce compteur-décompteur 247 délivre un signal d'adressage AD sur une sortie reliée à une entrée de la mémoire 28.

En parallèle un circuit de contrôle-mémoire 248 commandé d'une part par le processeur 30 et par le signal W/R est relié par une sortie à une entrée de la mémoire 28. Ce circuit 248 délivre sur sa sortie un signal d'autorisation d'accès à la mémoire AA.

Le déclenchement provoque la commande par le processeur 30 du décomptage de 241 rythmé par le séquenceur 20. Par l'intermédiaire du compteur 247, P écritures dans la mémoire 28 sont adressées.

Puis, le décomptage commence commandé par 247. Le décomptage correspond à la lecture du contenu de la mémoire 28.

Bien entendu, une fois les P + X valeurs lues par le processeur 30, la porte 22 est réouverte sous l'action du signal de commande délivré par 242 commandé par le processeur 30 et les écritures en mémoire s'effectuent normalement jusqu'au prochain déclenchement.

Le processeur 30 effectue le calcul de la direction et du sens d'arrivée de l'onde électromagnétique provenant de l'éclair à partir des valeurs numériques des flux magnétiques ayant traversé les spires 5 et 6 et la valeur du signe des variations du champ électrique.

Le processeur 30 calcule l'angle d'arrivée de l'onde par rapport à une direction déterminée, qui est celle de l'orientation d'une des spires par exemple. Cette direction peut être celle de l'axe Nord-Sud. La tangente de cet angle est donc égale au rapport des valeurs numérisées. L'angle est déterminé à $\pi$ près en prenant l'arc tangente de ce rapport.

On lève l'indétermination en résolvant l'équation de propagation de l'onde ; c'est-à-dire en comparant le signe des variations du champ électrique au signe d'un des flux magnétiques.

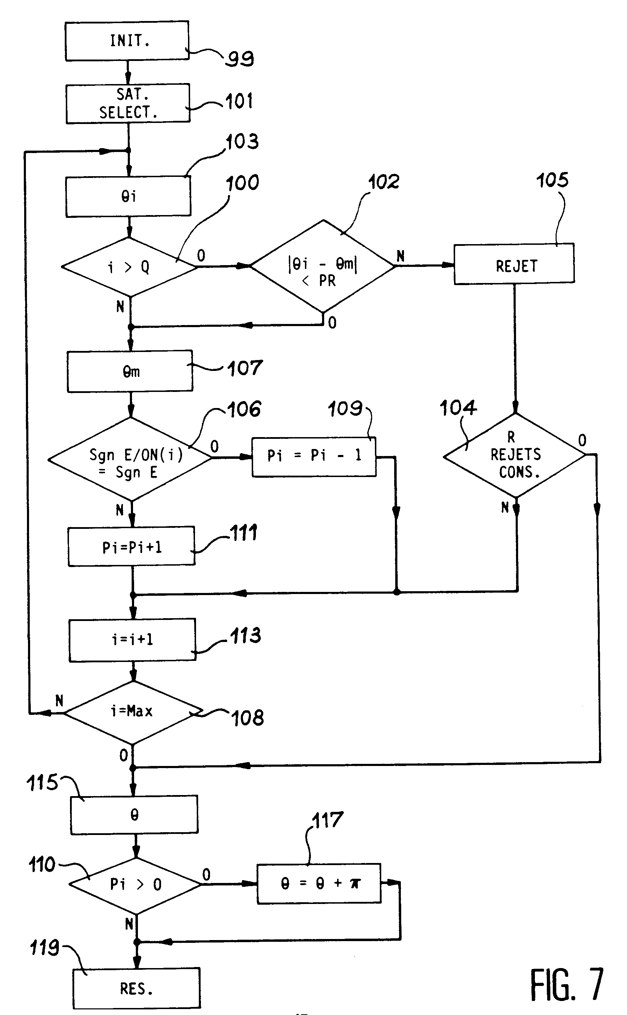

La figure 7 représente un organigramme qui regroupe les principales étapes du calcul de la direction et du sens d'arrivée de l'onde.

Cet organigramme comporte des blocs symbolisant une opération et comportant une entrée et une sortie, excepté le premier bloc 100 qui symbolise l'opération d'initialisation (programme d'initialisation boot strap" en terminologie anglo-saxonne) et quine comporte qu'une sortie. Le dernier bloc 119 symbolise la tansmission des résultats et ne comporte qu'une arrivée.

Ces blocs symbolisent les opérations suivantes :

199 :    initialisation des paramètres : i = 1, Pi = 0, programme "boot strap" ;

101 :    détection d'éventuelles saturation, sélection des valeurs des signaux qui doivent être supérieures à un minimum fixé ;

EP 0 366 547 B1

103 :   détermination de l'angle θi, correspondant au i<sup>ème</sup> calcul ;
105 :   rejet et comptage des rejets successifs des valeurs θi trop éloignées de θm ;
107 :   calcul de la valeur moyenne θm ;
109 :   décrément du paramètre Pi, opération indiquant que le signe des variations du champ électrique est égal au signe de E/O numérisé (E/ON(i)) ;
111 :   incrément du paramètre Pi, opération indiquant un signe des variations du champ électrique différent du signe de E/O numérisé (E/ON(i)) ;
113 :   incrément du paramètre i ;
115 :   détermination de θ, angle d'arrivée de l'onde ;
117 :   levée de doute dans le cas où l'angle est égal à $\theta + \pi$ ;
119 :   émission des résultats.

L'organigramme comporte en outre des losanges qui symbolisent des alternatives qui peuvent être posées sous forme de questions auxquelles on peut répondre par OUI (O) ou par NON (N). Ces losanges présentent une entrée et deux sorties. Ces losanges symbolisent les alternatives suivantes :

100 :   i > Q ?
102 :   $|\theta i - \theta m|$ < PR ?
104 :   y a-t-il eu Q rejets consécutifs ?
106 :   signe de E/ON(i) = signe de E ?
108 :   i = Max ?, Max étant un nombre au-delà duquel tout calcul supplémentaire n'influe plus sur le résultat.
110 :   Pi > 0 ?

Le processeur dispose donc de P + X valeurs, 148 par exemple, pour effectuer son calcul : X valeurs, 20 par exemple, mesurées avant le déclenchement, c'est-à-dire correspondant à une partie de l'onde électromagnétique peu perturbée par d'éventuels parasites et P valeurs mesurées après le déclenchement. Ces valeurs sont rangées dans un ordre connu dans une mémoire interne au microprocesseur.

Parmi les X valeurs, on en sélectionne un nombre Q, 3 par exemple qui vont servir à calculer une valeur moyenne θm de l'angle d'arrivée de l'onde par rapport à la direction de référence. Ces Q valeurs sont par exemple celles qui précèdent le déclenchement. Cette sélection est effectuée lors de l'opération d'initialisation 99.

Le calcul débute par l'opération 101 : pour chaque valeur mesurée, on détecte une éventuelle saturation, cette dernière pouvant survenir si l'éclair est très proche des capteurs par exemple. L'opération 101 se poursuit par une sélection : chaque valeur mesurée est comparée avec une valeur minimum. Les points ayant des valeurs inférieures à cette valeur minimum ne sont pas calculés, ils sont considérés comme non représentatifs.

La valeur minimum peut être prise égale à la plus grande des valeurs mesurées divisée par un coefficient. Ce coefficient peut être égal à 10 par exemple.

Un paramètre i initialisé à 1 indique chaque calcul effectué. La valeur de l'angle d'arrivée est notée θi. En fait pour des raisons de gain de temps sur les opérations, tous les calculs intermédiaires se font sur la tangente de θi et ce n'est qu'en fin de calcul (opération 115) que l'on calcule l'arc tangente.

Tant que i est inférieure (alternative 100) à une valeur Q déterminée (égale à 3 par exemple), les angles θi sont moyennés pour donner une valeur θm de référence (opération 107).

Si i est supérieur à Q, on compare $|\theta i - \theta m|$ à un nombre PR qui détermine la précision du calcul (alternative 102). PR peut correspondre à 0,5° par exemple.

Si $|\theta i - \theta m|$ est inférieure à PR, la valeur θi est moyennée pour donner une nouvelle valeur de θm.

Dans le cas contraire ($|\theta i - \theta m|$ > PR), la valeur θi est rejetée (opération 105), et on compte le nombre de valeurs consécutives rejetées.

Si R valeurs consécutives ont été rejetées, R étant égal à 5 par exemple, le calcul est stoppé et on détermine l'angle θ à partir de la valeur moyenne précédemment calculée (alternative 104). Ce critère d'arrêt correspond à la détection d'une divergence entre les valeurs calculées et la valeur moyenne de l'angle θm. Cette divergence correspond à l'apparition d'une impulsion parasite et on stoppe le calcul pour ne pas en tenir compte dans la détermination de l'angle d'arrivée.

Pour chaque i, on calcule le signe de E/O numérisé et noté E/ON(i) (valeur de E/ON pour le ième calcul). On compare ce signe avec le signe de E (alternative 106) ; cela permet d'incrémenter ou de décrémenter, suivant que ces signes sont différents ou non, un paramètre Pi (opérations 109, 111).

Ces calculs effectués, i est incrémenté 113 et comparé à une valeur déterminée Max, opération 108. On effectue (Max-Q) comparaisons avec la valeur moyenne θm. La valeur Max est prise par exemple égale à 32. Au-delà de ce nombre de calculs effectués, la valeur moyenne de l'angle d'arrivée ne varie plus de façon notable (le processus converge vers la valeur moyenne) et le calcul peut être stoppé.

On détermine alors la valeur de l'angle en prenant l'arc tangente de la valeur moyenne de la tangente de l'angle d'arrivée qui a été en réalité calculée jusqu'ici (opération 115).

On effectue ensuite la levée de doute (alternative 110 et opération 117).

8

Le résultat (angle d'arrivée déterminé avec certitude) est alors disponible. Il est affiché ou envoyé vers d'autres dispositifs pour servir à d'autres calculs (opération 119).

Seule la détermination de l'angle d'arrivée est donnée ici, mais le résultat complet tient compte de données statistiques : nombre de points calculés, heure du déclenchement, saturation des voies, ... Le processeur 30 assure le calcul de tous ces paramètres annexes usuellement fournis par ce type de dispositif. Afin de pouvoir fournir l'heure du déclenchement, le processeur 30 est relié à une horloge qui peut être soit interne soit externe au dispositif.

Bien entendu, il va de soi que l'invention ne se limite nullement aux exemples de réalisation plus spécialement décrits et représentés. Elle admet au contraire toutes les variantes. En particulier, plusieurs dispositifs peuvent être couplés pour déterminer la localisation d'un éclair. Dans ce cas, les processeurs des dispositifs sont reliés entre eux par des moyens de transmission classiques. Un de ces dispositifs est dit principal ; les autres sont appelés des dispositifs distants. Seul le principal doit être équipé d'une horloge pour dater l'éclair. Chaque dispositif (principal et distant) effectue la détermination de l'angle d'arrivée de l'onde électromagnétique. Le principal collecte les différents angles provenant des distants.

Une opération de corrélation classique est effectuée par le principal pour associer de manière sûre les différents résultats provenant des distants.

Le principal peut calculer la localisation de l'éclair par triangulation. Il peut aussi envoyer tous ces résultats vers une station éloignée où sera effectué le calcul de triangulation, la cartographie des localisations et toute l'analyse des résultats.

Grâce à l'utilisation d'une opération de "prétrigg" et à la comparaison des angles d'arrivée avec une valeur moyenne calculée sur des points peu soumis à des perturbations, un procédé selon l'invention permet de déterminer de façon sûre la direction et le sens d'arrivée d'une onde électromagnétique.

## Revendications

1. Procédé pour déterminer la direction et le sens d'arrivée d'une onde électromagnétique, cette onde étant détectée de manière à obtenir : un premier signal électrique analogique E/O proportionnel à l'amplitude de l'induction magnétique et correspondant à une première composante de l'onde électromagnétique suivant un premier plan vertical, un second signal électrique analogique N/S proportionnel à l'amplitude de l'induction magnétique et correspondant à une deuxième composante de l'onde électromagnétique, suivant un second plan vertical et orthogonal au premier, un troisième signal électrique analogique E proportionnel aux variations temporelles de l'amplitude du champ électrique composant l'onde électromagnétique, ce procédé étant caractérisé en ce qu'il consiste à :
   – en permanence et à une période T échantillonner et convertir les signaux E/O et N/S en signaux numériques E/ON et N/SN de manière synchrone,
   – déterminer le signe du signal E, de manière synchrone avec la conversion des signaux E/O et N/S,
   – mémoriser les signaux numériques E/ON et N/SN et le signe de E leur correspondant,
   – à partir d'un déclenchement, effectuer encore une mémorisation de P mots, un mot étant constitué par les signaux numériques E/ON et N/SN et le signe de E leur correspondant pour chaque échantillonnage, puis lire ces P mots et X mots précédant ces P mots,
   – traiter les signaux et les signes lus de manière à déterminer, au moins, la direction et le sens d'arrivée de l'onde électromagnétique par rapport à une direction de référence déterminée.

2. Procédé selon la revendication 1, caractérisé en ce que la détermination de la direction et du sens d'arrivée consiste à :
   – sélectionner Q mots parmi les X mots précédant le déclenchement, Q étant un nombre inférieur ou égal à X, et pour chacun de ces Q mots,
   – calculer l'angle d'arrivée par rapport à la direction de référence,
   – calculer une valeur moyenne $\theta m$ de l'angle d'arrivée à partir des Q angles calculés précédemment,
   – sélectionner (Max-Q) mots parmi les P mots suivant le déclenchement, Max étant le nombre total maximum d'angles calculés,
   – pour chacun de ces (Maz-Q) mots, calculer l'angle d'arrivée et comparer cet angle à $\theta m$,
   – si la valeur absolue de la différence entre ces deux valeurs est supérieure à une valeur PR définissant la précision du calcul, rejeter cet angle, sinon recalculer la valeur moyenne en prenant en compte cet angle,
   – si R angles calculés successivement ont été rejetés, stopper le calcul,
   – déterminer le sens d'arrivée de l'onde.

3. Procédé selon la revendication 1, caractérisé en ce que le déclenchement consiste à comparer la valeur absolue du signal E avec un signal de référence VS, et autoriser la mémorisations des P mots à partir du moment où la valeur absolue de E est supérieure à VS.

4. Dispositif pour la mise en oeuvre d'un procédé conforme à la revendication 1, caractérisé en ce qu'il comprend :

– des premiers moyens (14) pour convertir un signal électrique analogique E/O en un signal numérique E/ON, ces moyens (14) délivrant ce dernier sur une sortie,

– des seconds moyens (16) pour convertir un signal électrique analogique N/S en un signal numérique N/SN, ces moyens (16) délivrant ce dernier sur une sortie,

– des moyens (18) pour comparer la valeur absolue d'un signal E avec un signal de référence VS et déterminer le signe dudit signe E, ces moyens délivrant sur une première sortie un signal de déclenchement D lorsque la valeur absolue du signal comparé est supérieure au signal de référence VS, et délivrant sur une seconde sortie un signal SE indiquant le signe du signal comparé,

– des moyens (24) de comptage-décomptage délivrant un signal d'autorisation d'écriture et de lecture W/R sur une sortie, un signal de comptage AD sur une autre sortie, et délivrant sur une dernière sortie un signal d'autorisation d'accès AA,

– un séquenceur (20) délivrant un signal C1 de synchronisation sur une première sortie reliée à des entrées des premiers et seconds moyens (14, 16) pour convertir un signal analogique en un signal numérique et délivrant un signal de synchronisation C2 sur une sortie reliée à une entrée des moyens (18) de comparaison et de détermination du signe d'un signal, et à des entrées des moyens (14, 16) de conversion analogique numérique et délivrant un signal de synchronisation C3 sur une sortie reliée à une entrée des moyens de comptage décomptage (24),

– une porte (22) reliée par une première entrée à la sortie des premiers moyens (14) pour convertir un signal analogique en signal numérique, par une seconde entrée à la sortie des seconds moyens (16) de conversion analogique/numérique, par une troisième entrée à la seconde sortie des moyens (18) de comparaison et de détermination du signe d'un signal et par une quatrième entrée à la sortie des moyens (24) de comptage-décomptage, cette porte (22) délivrant un signal W sur une sortie,

– une mémoire (28) reliée par une première entrée à la sortie de la porte (22), par une seconde entrée à la sortie des moyens (24) de comptage-décomptage délivrant le signal AA, par une troisième entrée à la sortie des moyens (24) de comptage/décomptage délivrant le signal AD et délivrant un signal R sur une sortie,

– un processeur (30) muni d'un coprocesseur de calcul et d'au moins quatre ports d'entrée-sortie, ce processeur (30) étant relié par une première entrée à la première sortie des moyens (18) de comparaison et de détermination du signe d'un signal, et par une seconde entée à la sortie de la mémoire (28), ce processeur (30) délivrant des signaux de commande CO1, CO2 sur une première sortie reliée à une entrée desdits moyens (18) de comparaison et de détermination du signe d'un signal, ainsi que sur une seconde sortie reliée à une entrée des moyens (24) de comptage-décomptage.

**Patentansprüche**

1. Verfahren zum Bestimmen der Einfallsrichtung und des Einfallsweges einer elektromagnetischen Welle, wobei diese Welle derart detektiert wird, daß man erhält: ein erstes analoges elektrisches Signal E/O, das proportional zur Amplitude der magnetischen Induktion ist und einer ersten Komponente der elektromagnetischen Welle entlang einer ersten vertikalen Ebene entspricht, ein zweites analoges elektrisches Signal N/S, das proportional zur Amplitude der magnetischen Induktion ist und einer zweiten Komponente der elektromagnetischen Welle entlang einer zweiten vertikalen Ebene senkrecht zur ersten entspricht, ein drittes analoges elektrisches Signal E, das proportional zu den zeitlichen Änderungen der Amplitude des elektrischen Feldes ist, das Bestandteil der elektromagnetischen Welle ist, wobei dieses Verfahren dadurch gekennzeichnet ist, daß es darin besteht:

– permanent und mit einer Periode T die Signale E/O und N/S abzutasten und synchron in digitale Signale E/ON und N/SN umzuwandeln,

– das Vorzeichen des Signals E synchron mit der Umwandlung der Signale E/O und N/S zu bestimmen,

– die digitalen Signale E/ON und N/SN und das ihnen entsprechende Vorzeichen von E zu speichern,

– von einem Auslöseereignis ab noch eine Speicherung von P Wörtern durchzuführen, wobei ein Wort aus den digitalen Signalen E/ON und N/SN und dem ihnen entsprechenden Vorzeichen von E für jede Abtastung besteht, und dann diese P Wörter und X diesen P Wörtern vorhergehende Wörter zu lesen,

– die gelesenen Signale und die Vorzeichen so zu bearbeiten, daß wenigstens die Einfallsrichtung und der Einfallsweg der elektromagnetischen Welle bezüglich einer bestimmten Bezugsrichtung bestimmt wird.

2. Verfahren nach Anspruch 1, dadurch gekennzeichnet, daß die Bestimmung der Einfallsrichtung und des Einfallsweges darin besteht:

– Q Wörter unter den dem Auslöseereignis vorangehenden X Wörtern auszuwählen, wobei Q eine Zahl kleiner oder gleich X ist, und für jedes dieser Q Wörter

– den Einfallswinkel bezüglich der Bezugsrichtung zu berechnen,

– einen mittleren Wert $\theta$m des Einfallswinkels ausgehend von den Q zuvor berechneten Winkeln zu berechnen,

– (Max-Q) Wörter aus den dem Auslösesignal folgenden P Wörtern auszuwählen, wobei Max die maximale Gesamtzahl von berechneten Winkeln ist,

– für jedes dieser (Max-Q) Wörter den Einfallswinkel zu berechnen und diesen Winkel mit $\theta$m zu vergleichen,

– wenn der Absolutwert der Differenz dieser beiden Werte größer als ein Wert PR liegt, der die Rechengenauigkeit bestimmt, diesen Winkel zurückzuweisen, andernfalls den mittleren Wert erneut zu berechnen, indem man diesen Winkel berücksichtigt,

– wenn R berechnete Winkel nacheinander zurückgewiesen wurden, die Berechnung anzuhalten,

– den Einfallsweg der Welle zu bestimmen.

3. Verfahren nach Anspruch 1, dadurch gekennzeichnet, daß das Auslöseereignis darin besteht, den Absolutwert E mit einem Bezugssignal VS zu vergleichen und die Speicherung der P Wörter von dem Moment an zu erlauben, in dem der Absolutwert von E gröber als VS ist.

4. Vorrichtung zum Ausführen eines Verfahrens nach Anspruch 1, dadurch gekennzeichnet, daß sie umfaßt:

– eine erste Vorrichtung (14) zum Umwandeln eines analogen elektrischen Signals E/O in ein digitales Signal E/ON, wobei diese Vorrichtung (14) letzteres auf einem Ausgang zu Verfügung stellt,

– eine zweite Vorrichtung (16) zum Umwandeln eines analogen elektrischen Signals N/S in ein digitales Signal N/SN, wobei diese Vorrichtung (16) letzteres auf einem Ausgang zu Verfügung stellt,

– eine Vorrichtung (18) zum Vergleichen des Absolutwerts eines Signals E mit einem Bezugssignal VS und zum Bestimmen des Vorzeichens des Signals E, wobei diese Vorrichtung auf einem ersten Ausgang ein Auslösesignal D bereitstellt, sobald der Asolutwert des verglichenen Signals gröber als das Bezugssignal VS ist, und auf einem zweiten Ausgang ein Signal SE bereitstellt, das das Vorzeichen des verglichenen Signals angibt,

– eine Vorrichtung zum Aufwärts- und Abwärtszählen (24) die ein Signal zur Freigabe von Schreiben und Lesen W/R auf einem Ausgang, ein Zählsignal AD auf einem weiteren Ausgang und ein Zugriffsfreigabesignal AA auf einem letzten Ausgang bereitstellt,

– einen Folgeschalter (20), der ein Synchronisationssignal C1 auf einem ersten Ausgang bereitstellt, der mit Eingängen der ersten und zweiten Vorrichtungen (14, 16) zum Umwandeln eines analogen Signals in ein digitales Signal verbunden ist, und ein Synchronisationssignal C2 auf einem Ausgang bereitstellt, der mit einem Eingang der Vorrichtung (18) zum Vergleichen und zum Bestimmen des Vorzeichens eines Signals und mit Eingängen der Vorrichtungen (14, 16) zur Analog/Digitalumwandlung verbunden ist, und ein Synchronisationssignal C3 auf einem Ausgang bereitstellt, der mit einem Eingang der Vorrichtung zum Aufwärts- und Abwärtszählen (24) verbunden ist,

– ein Gatter (22), das mit einem ersten Eingang mit dem Ausgang der ersten Vorrichtung (14) zum Umwandeln eines analogen Signals in ein digitales Signal, mit einem zweiten Eingang mit dem Ausgang der zweiten Vorrichtung (16) zur Analog/Digitalumwandlung, mit einem dritten Eingang mit dem zweiten Ausgang der Vorrichtung (18) zum Vergleichen und zum Bestimmen des Vorzeichens eines Signals und mit einem vierten Eingang mit dem Ausgang der Vorrichtung zum Aufwärtsund Abwärtszählen (24) verbunden ist, wobei das Gatter ein Signal W auf einem Ausgang bereitstellt,

– einen Speicher (28), der über einen ersten Eingang mit dem Ausgang des Gatters (22), über einen zweiten Eingang mit dem Ausgang der Vorrichtung zum Aufwärts- und Abwärtszählen (24), der das Signal AA erzeugt, und mit einem dritten Eingang mit dem Ausgang der Vorrichtung zum Aufwärts- und Abwärtszählen (24), der das Signal AD erzeugt, verbunden ist, und der ein Signal R über einen Ausgang bereitstellt,

– einen Prozessor (30), der mit einem numerischen Koprozessor und wenigstens vier Eingangs/Ausgangsanschlüssen versehen ist, wobei dieser Prozessor (30) über einen ersten Eingang mit dem ersten Ausgang der Vorrichtung (18) zum Vergleichen und zum Bestimmen des Vorzeichens eines Signals und mit einem zweiten Eingang mit dem Ausgang des Speichers (28) verbunden ist, wobei dieser Prozessor (30) Steuerungssignale CO1, CO2 auf einem ersten Ausgang, der mit einem Eingang der Vorrichtung (18) zum Vergleichen und zum Bestimmen des Vorzeichens eines Signals verbunden ist, ebenso wie auf einem zweiten Ausgang bereitstellt, der mit einem Eingang der Vorrichtung zum Aufwärts- und Abwärtszählen (24) verbunden ist.

**Claims**

1. Method of determining the direction and sense of arrival of an electromagnetic wave, this wave being detected in such a way as to obtain: a first analogue electrical signal E/O proportional to the amplitude of the magnetic induction and corresponding to a first component of the electromagnetic wave following a first vertical plane, a second analogue electrical signal N/S proportional to the amplitude of the magnetic induction and corresponding to a second component of the electromagnetic wave, following a second vertical plane orthogonal to the first, a third analogue electrical signal E proportional to the time variations in the amplitude of the electric field constituting the electromagnetic wave, this method being characterised in that it consists in:

– permanently and with a period T sampling and converting the signals E/O and N/S into digital signals E/ON and N/SN synchronously,

– determining the sign of the signal E, synchronously with the converting of the signals E/O and N/S,

– storing the digital signals E/ON and N/SN and the sign of E corresponding to them,

– starting from a triggering, performing another storage of P words, one word consisting of the digital signals E/ON and N/SN and the sign of E corresponding to them for each sampling, then reading these P words and X words preceding these P words,

– processing the signals and the signs read in such a way as to determine, at least, the direction and the sense of arrival of the electromagnetic wave relative to a specified reference direction.

2. Method according to Claim 1, characterised in that the determination of the direction and of the sense of arrival consists in:

– selecting Q words from the X words preceding the triggering, Q being a number less than or equal to X, and for each of these Q words,

– calculating the angle of arrival relative to the reference direction,

– calculating an average value θm of the angle of arrival from the Q previously calculated angles,

– selecting (Max-Q) words from the P words following the triggering, Max being the maximum total number of angles calculated,

– for each of these (Max-Q) words, calculating the angle of arrival and comparing this angle to θm,

– if the absolute value of the difference between these two values is greater than a value PR defining the accuracy of the calculation, rejecting this angle, otherwise recalculating the average value taking account of this angle,

– if R successively calculated angles have been rejected, stopping the calculation,

– determining the sense of arrival of the wave.

3. Method according to Claim 1, characterised in that the triggering consists in comparing the absolute value of the signal E with a reference signal VS, and authorising the storage of the P words starting from the moment when the absolute value of E is greater than VS.

4. Device for implementing a method according to Claim 1, characterised in that it comprises:

– first means (14) for converting an analogue electrical signal E/O into a digital signal E/ON, these means (14) delivering this signal on an output,

– second means (16) for converting an analogue electrical signal N/S into a digital signal N/SN, these means (16) delivering this signal on an output,

– means (18) for comparing the absolute value of a signal E with a reference signal VS and determining the sign of the said signal E, these means delivering on a first output a triggering signal D when the absolute value of the compared signal is greater than the reference signal VS, and delivering on a second output a signal SE indicating the sign of the compared signal,

– counting-up/counting-down means (24) delivering a write-and-read authorisation signal W/R on an output, a count-up signal AD on another output, and delivering on a last output an access authorisation signal AA,

– a sequencer (20) delivering a synchronising signal C1 on a first output connected to inputs of the first and second means (14, 16) for converting an analogue signal into a digital signal and delivering a synchronising signal C2 on an output connected to an input of the means (18) for comparing and determining the sign of a signal, and to inputs of the means (14, 16) of analogue digital conversion and delivering a synchronising signal C3 on an output connected to an input of the counting-up/countingdown means (24),

– a gate (22) connected by a first input to the output of the first means (14) for converting an analogue signal into a digital signal, by a second input to the output of the second means (16) of analogue/digital conversion, by a third input to the second output of the means (18) for comparing and determining the sign of a signal and by a fourth input to the output of the counting-up/counting-down means (24), this gate (22) delivering a signal W on an output,

– a memory (28) connected by a first input to the output of the gate (22), by a second input to the output

12

of the counting-up/counting-down means (24) delivering the signal AA, by a third input to the output of the counting-up/counting-down means (24) delivering the signal AD and delivering a signal R on an output,
– a processor (30) provided with a computational coprocessor and with at least four input/output ports, this processor (30) being connected by a first input to the first output of the means (18) for comparing and determining the sign of a signal, and by a second input to the output of the memory (28), this processor (30) delivering control signals CO1, CO2 on a first output connected to an input of the said means (18) for comparing and determining the sign of a signal, as well as on a second output connected to an input of the counting-up/counting-down means (24).

FIG.1 A

FIG.1 B

FIG. 2

FIG. 3

FIG. 4

FIG. 5

FIG. 6

16

FIG. 7